# EUROPEAN PATENT SPECIFICATION

(11) **EP 4 250 426 B1**
(45) Date of publication and mention of the grant of the patent: **15.07.2026**
(21) Application number: 22739410.3
(22) Date of filing: 12.01.2022
(51) Int. Cl.: H01M 10/0585, H01G 11/80, H01M 10/04, H01M 50/183

(54) **POWER STORAGE CELL AND POWER STORAGE DEVICE**
STROMSPEICHERZELLE UND STROMSPEICHERVORRICHTUNG
CELLULE DE STOCKAGE D'ÉNERGIE ET DISPOSITIF DE STOCKAGE D'ÉNERGIE

(30) Priority: 13.01.2021 JP 2021003409
(43) Date of publication of application: 27.09.2023
(73) Proprietor: KABUSHIKI KAISHA TOYOTA JIDOSHOKKI, Kariya-shi, Aichi 448-8671 (JP)
(72) Inventor: OKAMOTO, Yuki, Kariya-shi, Aichi 448-8671 (JP); KAMIYA, Ryota, Kariya-shi, Aichi 448-8671 (JP)
(74) Representative: TBK
(86) International application number: PCT/JP2022/000693
(87) International publication number: WO 2022/154005

(56) References cited:
- JP-A- 2005 005 163
- JP-A- 2018 133 323
- JP-A- 2018 133 323
- JP-A- 2019 149 341
- JP-A- 2021 174 726
- US-B2- 7 163 765

## Description

### Technical Field

The present invention relates to a power storage cell and a power storage device.

### Background Art

JP 2019 - 175 778 A (hereafter also referred to as "Patent Literature 1") discloses a bipolar battery formed by bipolar electrodes being stacked via an insulating layer, each bipolar electrode having a current collector, a cathode layer formed on one surface of the current collector, and an anode layer formed on the other surface of the current collector. In this bipolar battery, a resin layer is bonded to the peripheral edge portion of the one surface and the other surface of the current collector.

JP 2018 - 133 323 A discloses a power storage device having the features in the preamble of claim 1. US 7 163 765 B2 discloses further prior art.

### Summary of Invention

### Technical Problem

In the battery disclosed in Patent Literature 1, the displacement of the current collector is restricted by the resin layer in a bonded area with the resin layer. Thus, when pressure increases abnormally in the cell, the current collector deforms to expand inside the bonded area starting from an inner edge of the bonded area. Stress caused by the deformation of the current collector concentrates on the inner edge of the bonded area. Such stress concentration weakens the bond between the current collector and the resin layer, and may cause the resin layer to peel away from the current collector. As a result, sealability may be reduced.

It is an object of the present invention to provide a power storage cell and a power storage device which are capable of suppressing the reduction in sealability.

### Solution to Problem

The above object is solved by a power storage cell according to claim 1.

In the power storage cell above, the sealing portion has the first resin layer bonded to one surface of the first current collector, the second resin layer bonded to one surface of the second current collector, and the third resin layer provided between the first resin layer and the second resin layer, and welded to the first resin layer and the second resin layer. The inner edge of the welded area is positioned outward of the inner edge of the bonded area between the first resin layer and the first current collector, and the inner edge of the bonded area between the second resin layer and the second current collector, when viewed in the facing direction. Consequently, a portion of stress generated by the deformation of the first current collector and the second current collector is transferred from the inner edge of the bonded area between the first resin layer and the first current collector and the inner edge of the bonded area between the second resin layer and the second current collector, respectively, to the inner edge of the welded area between the first resin layer and the third resin layer and the inner edge of the welded area between the second resin layer and the third resin layer. Stress can thus be distributed, so that peeling of the sealing portion from the first current collector and the second current collector can be suppressed. As a result, the reduction in sealability can be suppressed. Additionally, the first resin layer and the second resin layer are provided spaced from the cathode active material layer and the anode active material layer. Thus, excess space capable of containing gas that is generated inside the power storage cell by various electrochemical reactions that, for example, accompany charging and discharging can be secured.

An inner edge of the first resin layer and an inner edge of the second resin layer may be positioned inward of an inner edge of the third resin layer when viewed in the facing direction. In this case, excess space can be more easily secured compared to a case in which the inner edge of the third resin layer is at the same position as the inner edge of the first resin layer and the inner edge of the second resin layer.

The inner edge of the bonded area between the first resin layer and the first current collector and the inner edge of the bonded area between the second resin layer and the second current collector may be positioned inward of the inner edge of the third resin layer when viewed in the facing direction.

The welded area may overlap the bonded area between the first resin layer and the first current collector, and the bonded area between the second resin layer and the second current collector when viewed in the facing direction.

The inner edge of the welded area may be positioned outward of an outer edge of the first current collector and an outer edge of the second current collector when viewed in the facing direction.

The bonded area between the first resin layer and the first current collector may be formed by an entire interface between the first resin layer and the one surface of the first current collector, and the bonded area between the second resin layer and the second current collector may be formed by an entire interface between the second resin layer and the one surface of the second current collector. In this case, the peeling of the sealing portion from the first current collector and the second current collector can be effectively suppressed.

Thicknesses of the first resin layer and the second resin layer may be less than or equal to a thickness of the third resin layer in the facing direction. In this case, the stress generated by the deformation of the first current collector and the second current collector tends to be applied more strongly to the inner edge of the welded area between the first resin layer and the third resin layer and the inner edge of the welded area between the second resin layer and the third resin layer than to the inner edge of the bonded area between the first resin layer and the first current collector and the inner edge of the bonded area between the second resin layer and the second current collector. The weld strength between the first resin layer and the third resin layer is greater than the bond strength between the first current collector and the first resin layer. The weld strength between the second resin layer and the third resin layer is greater than the bond strength between the second current collector and the second resin layer. That is, the reduction in sealability can be effectively suppressed, since the stress generated by the deformation of the first current collector and the second current collector is distributed, and the distributed stress can be concentrated on the portion at which the bond strength is high.

The first resin layer or the second resin layer may include an exposed portion exposed from the third resin layer to face the space, and an end portion of the separator may be fixed to the exposed portion. In this case, the separator can be spaced from the welded area between the third resin layer and the first resin layer and the welded area between the third resin layer and the second resin layer. If the separator is in contact with these welded areas, the welded areas may swell due to the electrolyte impregnated in the separator, and the weld strength may be reduced. In the configuration in which the separator is spaced from these welded areas, the weld strength is not likely to be reduced.

The above object is also solved by a power storage device according to claim 9.

In the power storage device above, the power storage cells are connected in series in a stacking direction, so that sealability can be improved while achieving output.

The first resin layer may be provided to extend beyond the first current collector when viewed in the facing direction, the second resin layer may be provided to extend beyond the second current collector when viewed in the facing direction, and the first resin layer and the second resin layer respectively provided on the first current collector and the second current collector adjacent to each other in the facing direction may be welded to each other outside of the first current collector and the second current collector when viewed in the facing direction. In this case, the entirety of edge portions of the first current collector and the second current collector can be covered by the first resin layer and the second resin layer, so that the third resin layer does not come into contact with the first current collector or the second current collector. Accordingly, a material that has a low bond strength to the first current collector and the second current collector can be selected as the material for forming the third resin layer.

### Advantageous Effects of Invention

The present invention is capable of providing a power storage cell and a power storage device which are capable of suppressing the reduction in sealability.

### Brief Description of Drawings

FIG. 1 is a schematic cross-sectional view illustrating a power storage device according to an embodiment.
FIG. 2 is a schematic cross-sectional view of a power storage cell illustrated in FIG. 1.
FIG. 3 is a schematic cross-sectional view describing a method for manufacturing the power storage device illustrated in FIG. 1.
FIG. 4 is a schematic cross-sectional view illustrating a power storage device according to first variation.
FIG. 5 is a schematic cross-sectional view of a power storage cell illustrated in FIG. 4.
FIG. 6 is a schematic cross-sectional view describing a method for manufacturing the power storage device illustrated in FIG. 4.
FIG. 7 is a schematic cross-sectional view illustrating a power storage device according to second variation.
FIG. 8 is a schematic cross-sectional view of a power storage cell illustrated in FIG. 7.
FIG. 9 is a schematic cross-sectional view describing a method for manufacturing the power storage device illustrated in FIG. 8.

### Description of Embodiments

Embodiments of the present disclosure will be described in detail below with reference to the accompanying drawings. Same reference signs are given to the same or similar elements in the description of the drawings, and redundant description will be omitted.

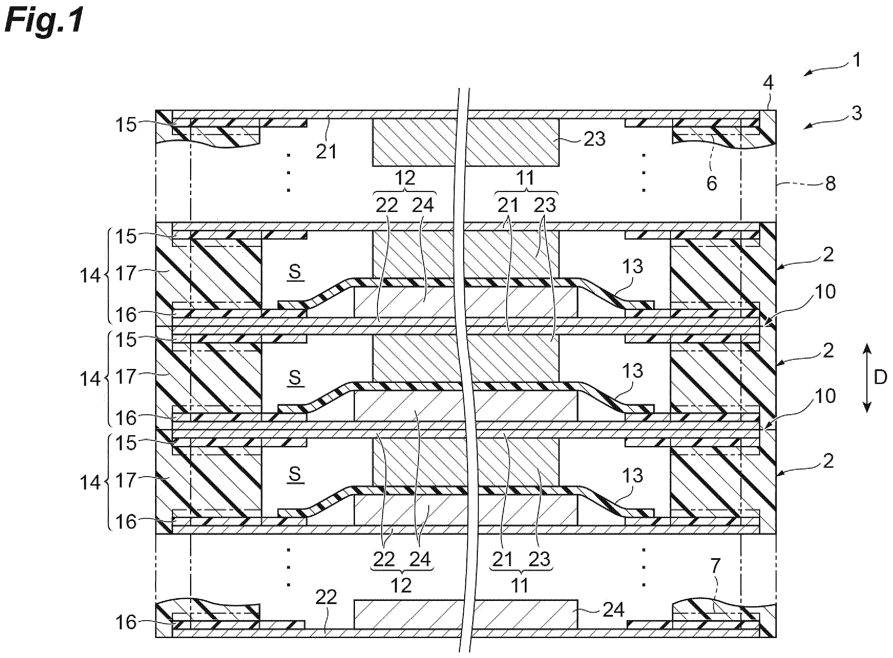

FIG. 1 is a schematic cross-sectional view illustrating a power storage device according to an embodiment. A power storage device 1 illustrated in FIG. 1 is a power storage module used for the battery of various vehicles such as forklifts, hybrid vehicles, and electric vehicles. The power storage device 1 is a secondary battery such as a nickel-hydrogen secondary battery or a lithium-ion secondary battery. The power storage device 1 may be an electric double layer capacitor or a solid-state battery. This embodiment exemplifies a case in which the power storage device 1 is a lithium-ion secondary battery.

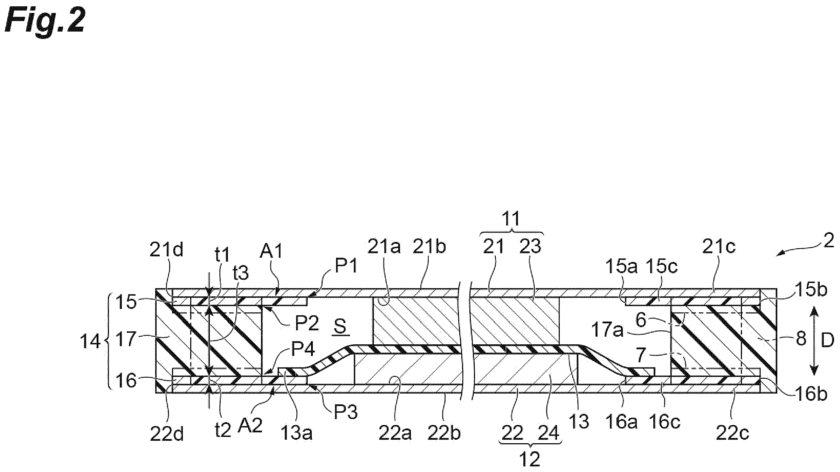

The power storage device 1 includes a cell stack 3 in which a plurality of power storage cells 2 are stacked. FIG. 2 is a schematic cross-sectional view of a power storage cell illustrated in FIG. 1. FIG. 2 is a partly enlarged view of FIG. 1. As illustrated in FIGS. 1 and 2, each power storage cell 2 includes a cathode 11, an anode 12, a separator 13, and a sealing portion 14. The cathode 11 and the anode 12 are disposed facing each other. A facing direction D of the cathode 11 and the anode 12 coincides with a stacking direction of the plurality of power storage cells 2. The cathode 11 and the anode 12 are, for example, rectangular electrodes when viewed in the facing direction D.

The cathode 11 includes a current collector 21 (first current collector) and a cathode active material layer 23. The current collector 21 has a first face 21a and a second face 21b which face away from each other, and an edge portion 21c. The cathode active material layer 23 is provided on the first face 21a. The cathode active material layer 23 is not provided on the second face 21b. The cathode active material layer 23 is not provided on the first face 21a side or the second face 21b side of the edge portion 21c. In other words, the first face 21a has an area in the edge portion 21c in which the cathode active material layer 23 is not provided. The edge portion 21c is positioned outside of an area of the current collector 21 in which the cathode active material layer 23 is provided when viewed in the facing direction D.

The anode 12 includes a current collector 22 (second current collector) and an anode active material layer 24. The current collector 22 has a first face 22a and a second face 22b which face away from each other, and an edge portion 22c. The anode active material layer 24 is provided on the first face 22a. The anode active material layer 24 faces the cathode active material layer 23 in the facing direction D. The anode active material layer 24 is not provided on the second face 22b. The anode active material layer 24 is not provided on the first face 22a side or the second face 22b side of the edge portion 22c. In other words, the first face 22a has an area in the edge portion 22c in which the anode active material layer 24 is not provided. The edge portion 22c is positioned outside of an area of the current collector 22 in which the anode active material layer 24 is provided when viewed in the facing direction D.

The cathode 11 and the anode 12 are disposed such that the cathode active material layer 23 and the anode active material layer 24 face each other in the facing direction D. In this embodiment, the cathode active material layer 23 and the anode active material layer 24 are both formed in a rectangular shape when viewed in the facing direction D. The anode active material layer 24 is formed slightly larger than the cathode active material layer 23. The entirety of the cathode active material layer 23 is positioned inward of an outer edge of the anode active material layer 24 when viewed in the facing direction D.

The cell stack 3 is formed by a plurality of power storage cells 2 being stacked such that the second face 21b of the current collector 21 of one power storage cell 2 is in contact with the second face 22b of the current collector 22 of another power storage cell 2. The plurality of power storage cells 2 are thus electrically connected in series. In the power storage cells 2, 2 adjacent to each other in the stacking direction, the current collector 21 of one power storage cell 2 and the current collector 22 of the other power storage cell 2 are in contact with each other, and are electrically connected to each other.

In the cell stack 3, a pseudo bipolar electrode 10 is formed by the current collector 21 and the current collector 22 serving as one current collector, the current collector 21 and the current collector 22 being in contact with each other due to the power storage cells 2, 2 being adjacent to each other in the stacking direction. A terminal electrode (cathode terminal electrode in this embodiment) including the current collector 21 is disposed on one end of the cell stack 3 in the stacking direction. A terminal electrode (anode terminal electrode in this embodiment) including the current collector 22 is disposed on the other end of the cell stack 3 in the stacking direction.

The current collectors 21, 22 are chemically inactive electrical conductors to keep current flowing to the cathode active material layer 23 and the anode active material layer 24 during discharging or charging of the lithium-ion secondary battery. For example, a metal material, a conductive resin material, or a conductive inorganic material may be used for the material forming the current collectors 21, 22. Examples of the conductive resin material include a conductive polymer material and a resin in which a conductive filler is added to a non-conductive polymer material. The current collectors 21, 22 may have a plurality of layers including one or more layers including the metal material or the conductive resin material mentioned above. A coating layer may be formed on the surfaces of the current collectors 21, 22 by a publicly known method such as plating or spray coating. The current collectors 21, 22 may be formed in the form of a plate, a foil, a sheet, a film, a mesh, and the like. For example, an aluminum foil, a copper foil, a nickel foil, a titanium foil, or a stainless steel foil is used in a case in which the current collectors 21, 22 are a metal foil. The current collectors 21, 22 may be an alloy foil or a clad foil of the metals above. In the case in which the current collectors 21, 22 are in the form of a foil, the thicknesses of the current collectors 21, 22 may be in the range of 1 µm or more and 100 µm or less. The current collectors 21, 22 may be integrated, for example, by plating copper onto one surface of an aluminum foil. The current collectors 21, 22 may also be integrated by being pasted together. In this embodiment, the current collector 21 is an aluminum foil, and the current collector 22 is a silver foil.

The cathode active material layer 23 includes a cathode active material that is capable of storing and releasing charge carriers such as lithium ion. Examples of the cathode active material include complex oxides, metallic lithium, and sulfur. The composition of the complex oxides includes, for example, at least one of iron, manganese, titanium, nickel, cobalt, and aluminum, and lithium. Examples of the complex oxides include olivine type lithium iron phosphate (LiFePO₄), LiCoO₂, and LiNiMnCoO₂.

The anode active material layer 24 includes an anode active material that is capable of storing and releasing charge carriers such as lithium ion. Examples of the anode active material include carbon such as graphite, artificial graphite, highly oriented graphite, mesocarbon microbeads, hard carbon, and soft carbon, metallic compounds, elements capable of alloying with lithium or compounds thereof, and boron-added carbon. Examples of elements capable of alloying with lithium include silicon and tin.

The cathode active material layer 23 and the anode active material layer 24 may also include a binding agent and a conductive additive, in addition to the active material. The binding agent serves to bind the active materials or the conductive additives together to maintain a conductive network in the electrode. Examples of the binding agent include fluorine-containing resin such as polyvinylidene fluoride, polytetrafluoroethylene, and fluororubber, thermoplastic resin such as polypropylene and polyethylene, imide-based resin such as polyimide and polyamide imide, alkoxysilyl group-containing resin, acrylic resin such as polyacrylic acid and polymethacrylic acid, styrene-butadiene rubber, carboxymethyl cellulose, alginate such as sodium alginate and ammonium alginate, water-soluble cellulose ether crosslinked body, and starch-acrylic acid graft polymer. These binding agents may be used singly or in plurality. The conductive additive is a conductive material such as acetylene black, carbon black, or graphite, and is capable of increasing electrical conductivity. N-methyl-2-pyrrolidone and the like is used as a viscosity adjusting solvent.

A conventionally publicly known method such as roll coating, die coating, dip coating, doctor blading, spray coating, or curtain coating is used to form the cathode active material layer 23 and the anode active material layer 24 on the first faces 21a, 22a. Specifically, the active material and the solvent, and optionally the binding agent and the conductive additive, are mixed to produce an active material layer forming composition in the form of a slurry, which is applied to the first faces 21a, 22a and dried. The solvent is, for example, N-methyl-2-pyrrolidone, methanol, methyl isobutyl ketone, or water. The active material layer forming composition may be compressed after being dried to increase electrode density.

The separator 13 is disposed between the cathode 11 and the anode 12 in the facing direction D. The separator 13 is interposed between the cathode 11 and the anode 12. The separator 13 is a member that allows charge carriers such as lithium ion to pass therethrough while separating the cathode 11 and the anode 12 placed adjacent to each other when the power storage cells 2 are stacked to prevent electrical shorting due to the contact between the cathode 11 and the anode 12. The separator 13 is disposed between the cathode active material layer 23 and the anode active material layer 24 that face each other.

The separator 13 has a rectangular shape slightly larger than the cathode active material layer 23 and the anode active material layer 24 and slightly smaller than the current collectors 21, 22 when viewed in the facing direction D. An end portion 13a of the separator 13 is disposed outside of the cathode active material layer 23 and the anode active material layer 24 when viewed in the facing direction D. The end portion 13a of the separator 13 does not overlap the cathode active material layer 23 or the anode active material layer 24 when viewed in the facing direction D.

The separator 13 is formed, for example, in a sheet-shape. The separator 13 is, for example, a porous sheet or nonwoven fabric that includes polymer which absorbs and retains an electrolyte. Examples of the material that form the separator 13 include polypropylene, polyethylene, polyolefin, and polyester. The separator 13 may be a single layer structure or a multi-layer structure. In a case in which the separator 13 is a multi-layer structure, the separator 13 may, for example, include a base material layer and a pair of adhesive layers, and be adhered and fixed to the cathode active material layer 23 and the anode active material layer 24 by the pair of adhesive layers. The separator 13 may include a ceramic layer to be a heat resistant layer. The separator 13 may be reinforced by a vinylidene fluoride resin compound.

Examples of the electrolyte impregnated in the separator 13 include a liquid electrolyte (electrolytic solution) that includes a nonaqueous solvent and an electrolyte salt dissolved in the nonaqueous solvent, or a high polymer gel electrolyte including an electrolyte retained in a polymer matrix. In the case in which the electrolyte is impregnated in the separator 13, publicly known lithium salt such as LiClO₄, LiAsF₆, LiPF₆, LiBF₄, LiCF₃SO₃, LiN(FSO₂)₂, or LiN(CF₃SO₂)₂ may be used as the electrolyte salt. Additionally, publicly known solvents such as cyclic carbonates, cyclic esters, chain carbonates, chain esters, and ethers may be used as the nonaqueous solvent. It should be noted that two or more of these publicly known solvent materials may be combined.

The sealing portion 14 is a member that seals a space S between the current collector 21 and the current collector 22. The sealing portion 14 is frame-like when viewed in the facing direction D, and is disposed between the first face 21a of the current collector 21 and the first face 22a of the current collector 22 to surround the periphery of the cathode active material layer 23 and the anode active material layer 24. In the power storage cell 2, the space S is defined by the current collector 21, the current collector 22, and the sealing portion 14. The space S contains an electrolyte (not shown). The sealing portion 14 seals the electrolyte in the space S. The sealing portion 14 also functions as a spacer that maintains the spacing between the current collector 21 and the current collector 22 by being disposed between the current collector 21 and the current collector 22. The sealing portion 14 is adhered (bonded) to the edge portion 21c of the current collector 21 and the edge portion 22c of the current collector 22. The sealing portion 14 is spaced from the cathode active material layer 23 and the anode active material layer 24 when viewed in the facing direction D. The sealing portion 14 has electrical insulation properties.

The sealing portion 14 has a first resin layer 15, a second resin layer 16, and a third resin layer 17. The first resin layer 15, the second resin layer 16, and the third resin layer 17 are frame-like when viewed in the facing direction D. The first resin layer 15 is provided spaced from the cathode active material layer 23 and on the first face 21a. The first resin layer 15 is bonded to the first face 21a. A bonded area A1 between the first resin layer 15 and the current collector 21 is formed by an interface between the first resin layer 15 and the first face 21a. In this embodiment, the bonded area A1 is formed by the entire interface between the first resin layer 15 and the first face 21a. An inner edge P1 of the bonded area A1 coincides with an inner edge 15a of the first resin layer 15, and an outer edge of the bonded area A1 coincides with an outer edge 21d of the first face 21a, when viewed in the facing direction D. The second resin layer 16 is provided spaced from the anode active material layer 24 and on the first face 22a. The second resin layer 16 is bonded to the first face 22a. A bonded area A2 between the second resin layer 16 and the current collector 22 is formed by an interface between the second resin layer 16 and the first face 22a. In this embodiment, the bonded area A2 is formed by the entire interface between the second resin layer 16 and the first face 22a. An inner edge P3 of the bonded area A2 coincides with an inner edge 16a of the second resin layer 16, and an outer edge of the bonded area A2 coincides with an outer edge 22d of the first face 22a, when viewed in the facing direction D. The third resin layer 17 is provided between the first resin layer 15 and the second resin layer 16, and is welded to the first resin layer 15 and the second resin layer 16.

The inner edge 15a of the first resin layer 15 and the inner edge 16a of the second resin layer 16 are positioned inward of an inner edge 17a of the third resin layer 17 when viewed in the facing direction D. The inner edges 15a, 16a are positioned, for example, 1 mm or more inward from the inner edge 17a. That is, the first resin layer 15 includes an exposed portion 15c that is exposed from the third resin layer 17 to face the space S, and a width of the exposed portion 15c is 1 mm or more. The second resin layer 16 includes an exposed portion 16c that is exposed from the third resin layer 17 to face the space S, and a width of the exposed portion 16c is 1 mm or more. The widths of the exposed portions 15c, 16c are, for example, 4 mm. It should be noted that the widths of the exposed portions 15c, 16c are lengths of the exposed portions 15c, 16c in a direction intersecting the inner edges 15a, 16a when viewed in the facing direction D.

The third resin layer 17 is welded to the first resin layer 15 at a position outward of the inner edge 15a of the first resin layer 15 when viewed in the facing direction D. The third resin layer 17 is welded to the second resin layer 16 at a position outward of the inner edge 16a of the second resin layer 16 when viewed in the facing direction D. In this embodiment, a welded area 6 between the third resin layer 17 and the first resin layer 15 extends from an outer edge 15b of the first resin layer 15 to the inner edge 17a of the third resin layer 17 when viewed in the facing direction D. An inner edge P2 of the welded area 6 is positioned outward of the inner edge P1 of the bonded area A1 when viewed in the facing direction D. A welded area 7 between the third resin layer 17 and the second resin layer 16 extends from an outer edge 16b of the second resin layer 16 to the inner edge 17a of the third resin layer 17 when viewed in the facing direction D. An inner edge P4 of the welded area 7 is positioned outward of the inner edge P3 of the bonded area A2 when viewed in the facing direction D. The welded area 6 overlaps the bonded area A1 when viewed in the facing direction D. The welded area 7 overlaps the bonded area A2 when viewed in the facing direction D.

The end portion 13a of the separator 13 is fixed to the second resin layer 16 at a position inward of the inner edge 17a of the third resin layer 17. That is, the end portion 13a is fixed to the exposed portion 16c. The end portion 13a is partly adhered (welded) to the exposed portion 16c, for example, by spot welding. The end portion 13a is fixed to the exposed portion 16c, for example, by a width of 2 mm.

The first resin layer 15 is spaced from the cathode active material layer 23, and the inner edge 15a is positioned outside of the cathode active material layer 23, when viewed in the facing direction D. The second resin layer 16 is spaced from the anode active material layer 24, and the inner edge 16a is positioned outside of the anode active material layer 24, when viewed in the facing direction D. Although in this embodiment, the first resin layer 15 is also spaced from the anode active material layer 24 when viewed in the facing direction D, the first resin layer 15 may overlap the anode active material layer 24 so long as it is spaced from the cathode active material layer 23.

The first resin layer 15 is provided to extend to the outer edge 21d of the first face 21a. The third resin layer 17 is not in contact with the first face 21a. Although in this embodiment, the outer edge 15b of the first resin layer 15 coincides with the outer edge 21d of the first face 21a, the first resin layer 15 may extend beyond the outer edge 21d. The second resin layer 16 is provided to extend to the outer edge 22d of the first face 22a. The third resin layer 17 is not in contact with the first face 22a. Although in this embodiment, the outer edge 16b of the second resin layer 16 coincides with the outer edge 22d of the first face 22a, the second resin layer 16 may extend beyond the outer edge 22d.

A thickness t1 of the first resin layer 15 and a thickness t2 of the second resin layer 16 are, for example, less than or equal to a thickness t3 of the third resin layer 17, and may be smaller than the thickness t3, in the facing direction D. The thickness t1 is the thickness of the portion of the first resin layer 15 sandwiched between the current collector 21 and the third resin layer 17. The thickness t2 is the thickness of the portion of the second resin layer 16 sandwiched between the current collector 22 and the third resin layer 17. The thickness t3 is the thickness of the portion of the third resin layer 17 sandwiched between the first resin layer 15 and the second resin layer 16. The thickness t1 and the thickness t2 are, for example, 1/10 or more and 1/2 or less of the thickness t3. Although in this embodiment, the thickness t1 and thickness t2 are the same, they may be different. It should be noted that the thickness t1 and the thickness t2 may be greater than the thickness t3.

The first resin layer 15, the second resin layer 16, and the third resin layer 17 are formed of a resin material having electrolyte tolerance such as acid-modified polyethylene (acid-modified PE), acid-modified polypropylene (acid-modified PP), polyethylene, or polypropylene. The resin material forming the first resin layer 15, the second resin layer 16, and the third resin layer 17 may be the same or different. In this embodiment, the first resin layer 15 and the second resin layer 16 are formed of acid-modified polyethylene or acid-modified polypropylene. The third resin layer 17 is formed of polyethylene or polypropylene.

Acid-modified polyethylene and acid-modified polypropylene adhere to metal more easily than non-acid-modified polyethylene and non-acid-modified polypropylene. In a case in which the current collector 21 is made of metal, the adhesive strength (bond strength) of the first resin layer 15 to the current collector 21 can be improved by forming the first resin layer 15 of acid-modified polyethylene or acid-modified polypropylene. Similarly, in a case in which the current collector 22 is made of metal, the adhesive strength (bond strength) of the second resin layer 16 to the current collector 22 can be improved by forming the second resin layer 16 of acid-modified polyethylene or acid-modified polypropylene.

In this embodiment, a plurality of the sealing portions 14 arranged in a stacking direction of the cell stack 3 are integrated with each other by welding to form a rectangular tubular member 4. The tubular member 4 extends in the stacking direction of the cell stack 3 from the current collector 21 disposed on one end in the stacking direction to the current collector 22 disposed on the other end in the stacking direction. The tubular member 4 has a welded area 8. The welded area 8 is formed by outer edge portions of the plurality of the sealing portions 14 being integrated with each other by welding. The welded area 8 extends along the facing direction D at a substantially constant thickness. An outer surface of the welded area 8 is an outer surface of the tubular member 4. In this embodiment, the welded area 8 includes an outer edge portion of the welded area 6 and an outer edge portion of the welded area 7. That is, the welded area 6 and the welded area 7 form a part of the welded area 8. The welded area 8 has a portion that overlaps the current collectors 21, 22 when viewed in the facing direction D.

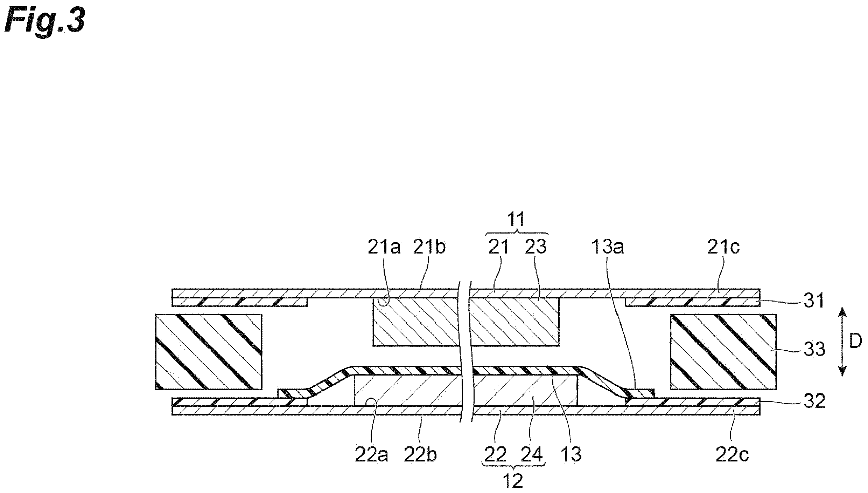

An example of a method for manufacturing the power storage device 1 will be described with reference to FIG. 3. FIG. 3 is a schematic cross-sectional view describing a method for manufacturing the power storage device illustrated in FIG. 1. Firstly, the cathode 11, the anode 12, a resin layer 31 to be the first resin layer 15, a resin layer 32 to be the second resin layer 16, and a resin layer 33 to be the third resin layer 17 are prepared. The resin layers 31, 32, 33 are formed, for example, by injection molding. Secondly, the resin layer 31 is attached to the cathode 11 and the resin layer 32 is attached to the anode 12. Specifically, the resin layer 31 is adhered to the first face 21a of the edge portion 21c of the current collector 21. The resin layer 32 is adhered to the first face 22a of the edge portion 22c of the current collector 22. The separator 13 is then disposed on the first face 22a of the anode 12, and the end portion 13a of the separator 13 is adhered and fixed to the resin layer 32 by spot welding.

Subsequently, as illustrated in FIG. 3, the resin layer 33 is inserted between the cathode 11 to which the resin layer 31 is attached and the anode 12 to which the resin layer 32 and the separator 13 are attached, and the resin layer 33 is welded to the resin layer 31 and the resin layer 32 to form the welded area 6 and the welded area 7. The space S (see FIG. 2) is thus formed. Thereafter, the resin layers 33 adjacent in the stacking direction are welded by pressing a heat plate against outer edges of the resin layers 33 to form the welded area 8. As a result, the power storage device 1 that includes the tubular member 4 formed by the plurality of the sealing portions 14 being integrated is obtained.

The operation and effect of the power storage cell 2 and the power storage device 1 will be described below. In the power storage cell 2, the current collectors 21, 22 tend to deform when the internal pressure of the space S increases in use. Accordingly, the current collectors 21, 22 tend to expand outward so as to separate from each other in the facing direction D. In the case in which the power storage cell 2 is used in the power storage device 1, the current collectors 21, 22 also tend to deform due to the pressure difference between adjacent power storage cells 2. In the power storage cell 2, the current collectors 21, 22 deform significantly particularly when the internal pressure increases abnormally.

The sealing portion 14 is bonded to the edge portions 21c, 22c of the current collectors 21, 22. The deformation of the current collectors 21, 22 is thus restricted by the sealing portion 14 at the edge portions 21c, 22c. The current collectors 21, 22 have an inner area in which the current collectors 21, 22 easily deform and an outer area in which the deformation of the current collectors 21, 22 is restricted by the sealing portion 14, with the inner edges P1, P3 of the bonded areas A1, A2 being the boundaries. The stress due to the deformation of the current collectors 21, 22 thus tends to concentrate on the inner edges P1, P3 of the bonded areas A1, A2 from where the deformation starts.

The sealing portion 14 has the first resin layer 15 bonded to the first face 21a of the current collector 21, the second resin layer 16 bonded to the first face 22a of the current collector 22, and the third resin layer 17 welded to the first resin layer 15 and the second resin layer 16. The third resin layer 17 is welded to the first resin layer 15 at a position outward of the inner edge 15a of the first resin layer 15 when viewed in the facing direction D. The inner edge P2 of the welded area 6 is positioned outward of the inner edge P1 of the bonded area A1 when viewed in the facing direction D. The current collector 21 thus has an area in which only the first resin layer 15 is provided. In this area, the deformation of the current collector 21 is less restricted than in an area in which the first resin layer 15, the second resin layer 16, and the third resin layer 17 are all provided. Consequently, a portion of the stress generated by the deformation of the current collector 21 is transferred from the inner edge P1 of the bonded area A1 to the inner edge P2 of the welded area 6.

Similarly, the third resin layer 17 is welded to the second resin layer 16 at a position outward of the inner edge 16a of the second resin layer 16 when viewed in the facing direction D. The inner edge P4 of the welded area 7 is positioned outward of the inner edge P3 of the bonded area A2 when viewed in the facing direction D. The current collector 22 thus has an area in which only the second resin layer 16 is provided. In this area, the deformation of the current collector 22 is less restricted than in the area in which the first resin layer 15, the second resin layer 16, and the third resin layer 17 are all provided. Consequently, a portion of the stress generated by the deformation of the current collector 22 is transferred from the inner edge P3 of the bonded area A2 to the inner edge P4 of the welded area 7.

In the battery disclosed in Patent Literature 1, the resin layer is a single layer, and the inner end face of the resin layer is not stepped. The stress generated by the deformation of the current collector thus concentrates on the inner edge of the bonded area between the resin layer and the current collector without being distributed. The bond strength between the current collector made of a metal foil and the sealing portion made of resin tend to be lower than the bond strength between resin members. In the power storage cell 2, the stress generated by the deformation of the current collectors 21, 22 can be distributed to the inner edges P2, P4 which are portions where resin members are bonded as described above, and thus peeling (cleaving) of the sealing portion 14 from the current collectors 21, 22 starting from the inner edges P1, P3 can be suppressed. Consequently, the reduction in sealability can be suppressed. Even when the sealing portion 14 does not peel off completely, the pressure resistance of the sealing portion 14 will gradually decrease as the time of use of the power storage cell 2 increases. In the power storage cell 2, the speed at which the pressure resistance of the sealing portion 14 decreases can be reduced by the stress being distributed. Accordingly, the time it takes for the pressure resistance of the sealing portion 14 to drop below the inner pressure of the space S (pressure resistance life) can be extended. Consequently, the battery life can be extended. Additionally, in the power storage cell 2, damage to the current collectors 21, 22 starting from the inner edges P1, P3 can also be suppressed. Furthermore, in the power storage cell 2, the widths of the first resin layer 15 and the second resin layer 16 (specifically, the widths of the portions of the first resin layer 15 and the second resin layer 16 that are welded to the current collectors 21, 22) can be reduced as a result of improvement in the pressure resistance strength due to the distribution of the stress.

The first resin layer 15 is provided spaced from the cathode active material layer 23 and on the first face 21a. The space S can thus be kept large compared to a case in which the first resin layer 15 is provided to extend to a position in contact with the cathode active material layer 23 on the first face 21a. Similarly, the second resin layer 16 is provided spaced from the anode active material layer 24 and on the first face 22a. Thus, excess space capable of containing gas that is generated inside the power storage cell 2 by various electrochemical reactions that, for example, accompany charging and discharging can be secured compared to a case in which the second resin layer 16 is provided to extend to a position in contact with the anode active material layer 24 on the first face 22a. As a result, long term pressure resistance (creep pressure resistance) of the power storage cell 2 can be improved.

The inner edge P1 of the bonded area A1 and the inner edge P3 of the bonded area A2 are positioned inward of the inner edge 17a of the third resin layer 17 when viewed in the facing direction D. Thus, excess space can be even more easily secured compared to a case in which the inner edge 17a of the third resin layer 17 is at the same position as the inner edge P1 of the bonded area A1 and the inner edge P3 of the bonded area A2.

The welded area 6 overlaps the bonded area A1 when viewed in the facing direction D. The welded area 7 overlaps the bonded area A2 when viewed in the facing direction D.

The bonded area A1 is formed by the entire interface between the first resin layer 15 and the first face 21a of the current collector 21. Adhesion between the first resin layer 15 and the current collector 21 is increased, so that the sealability with the sealing portion 14 can be enhanced. The bonded area A2 is formed by the entire interface between the second resin layer 16 and the first face 22a of the current collector 22. Adhesion between the second resin layer 16 and the current collector 22 is increased, so that the sealability with the sealing portion 14 can be enhanced.

The thickness t1 of the first resin layer 15 and the thickness t2 of the second resin layer 16 are each less than or equal to the thickness t3 of the third resin layer 17 in the facing direction D. In the area of the current collector 21 in which only the exposed portion 15c is provided, the deformation of the current collector 21 is less restricted since the thickness t1 is small. Thus, the stress generated by the deformation of the current collector 21 tends to be more strongly applied to the inner edge P2 than to the inner edge P1. The weld strength between the first resin layer 15 and the third resin layer 17 which are both made of resin is greater than the bond strength between the current collector 21 made of a metal foil and the first resin layer 15. That is, the reduction in sealability is effectively suppressed, since the stress generated by the deformation of the current collector 21 and the current collector 22 is distributed, and the distributed stress can be concentrated on the portion at which the bond strength is high (inner edge P2).

Similarly, in the area of the current collector 22 in which only the exposed portion 16c is provided, the deformation of the current collector 22 is less restricted since the thickness t2 in the facing direction D is small. Thus, the stress generated by the deformation of the current collector 22 tends to be more strongly applied to the inner edge P4 than to the inner edge P3. The weld strength between the second resin layer 16 and the third resin layer 17 which are both made of resin is greater than the bond strength between the current collector 22 made of a metal foil and the second resin layer 16. That is, the reduction in sealability is effectively suppressed, since the stress generated by the deformation of the current collector 21 and the current collector 22 is distributed, and the distributed stress can be concentrated on the portion at which the bond strength is high (inner edge P4).

The thickness t1 and the thickness t2 are, for example, 1/10 or more of the thickness t3. Thus, excessive concentration of stress on the inner edge P2 and the inner edge P4 can be suppressed. The first resin layer 15 and the second resin layer 16 may peel off from the current collectors 21, 22 at positions overlapping the inner edge 17a when viewed in the facing direction D, if the thicknesses t1, t2 are too small, even when the third resin layer 17 is welded strongly enough to the first resin layer 15 and the second resin layer 16, and does not peel off from the first resin layer 15 and the second resin layer 16.

The end portion 13a of the separator 13 is fixed to the exposed portion 16c of the second resin layer 16 at a position inward of the inner edge 17a of the third resin layer 17. The separator 13 can thus be spaced from the welded areas 6, 7. For example, if the separator 13 is in contact with the welded areas 6, 7, the welded areas 6, 7 may swell due to the electrolyte impregnated in the separator 13, and the weld strength of the welded areas 6, 7 may be reduced. Since the power storage cell 2 has the configuration in which the separator 13 is spaced from the welded areas 6, 7, the weld strength is not likely to be reduced. It is not necessary to insert the separator 13 between the third resin layer 17 and the first resin layer 15 or the second resin layer 16. The entire third resin layer 17 can thus be welded to the first resin layer 15 and the second resin layer 16. Additionally, positional misalignment of the separator 13 is suppressed since the separator 13 is fixed. Consequently, electrical shorting between the current collectors 21, 22 by the current collectors 21, 22 being in contact with each other is suppressed.

The first resin layer 15 is provided to extend to the outer edge 21d of the first face 21a. The second resin layer 16 is provided to extend to the outer edge 22d of the first face 22a. The first resin layer 15 and the second resin layer 16 are respectively bonded to the first face 21a of the current collector 21 made of a metal foil and the first face 22a of the current collector 22 made of a metal foil, and thus the first resin layer 15 and the second resin layer 16 need to be formed of a material having high bond strength to the current collectors 21, 22 which are made of a metal foil, such as acid-modified polyethylene or acid-modified polypropylene. However, the third resin layer 17 is not bonded to the first faces 21a, 22a, and can thus be formed of a material other than acid-modified polyethylene and acid-modified polypropylene.

Acid-modified polyethylene and acid-modified polypropylene are materials that have high adhesion to metal but tend to be permeable to electrolytic solutions compared to non-acid-modified polyethylene and non-acid-modified polypropylene. In this embodiment, the first resin layer 15 and the second resin layer 16 are formed of acid-modified polyethylene or acid-modified polypropylene, and the third resin layer 17 is formed of polyethylene or polypropylene. Thus, in the sealing portion 14, the bond strength to the current collectors 21, 22 can be improved by the first resin layer 15 and the second resin layer 16, and leakage of the electrolytic solution can be suppressed by the third resin layer 17.

The power storage device 1 includes the cell stack 3 in which the power storage cells 2 are stacked. The reduction in sealability can thus be suppressed.

### (First Variation)

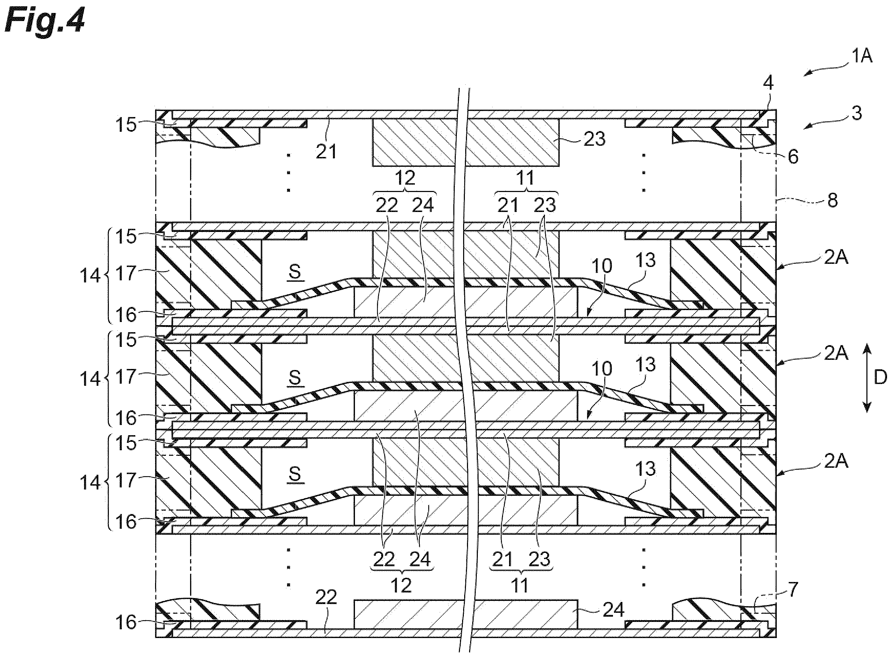

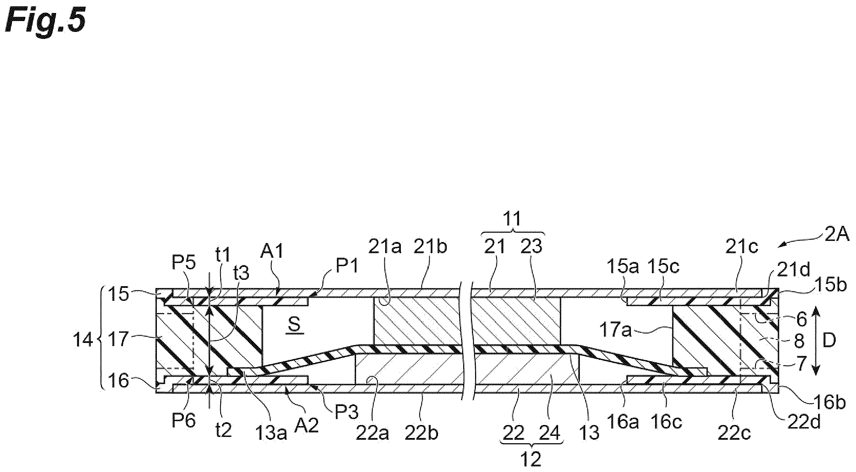

FIG. 4 is a schematic cross-sectional view illustrating a power storage device according to a first variation. FIG. 5 is a schematic cross-sectional view of a power storage cell illustrated in FIG. 4. FIG. 5 is a partly enlarged view of FIG. 4. As illustrated in FIGS. 4 and 5, a power storage device 1A according to the first variation includes a plurality of power storage cells 2A. The difference between the power storage cell 2A and the power storage cell 2 (see FIG. 2) is mainly the sealing portion 14 and the separator 13. In the power storage cell 2A, the third resin layer 17 is also welded to the first resin layer 15 at a position outward of the inner edge 15a of the first resin layer 15 when viewed in the facing direction D. The third resin layer 17 is welded to the second resin layer 16 at a position outward of the inner edge 16a of the second resin layer 16 when viewed in the facing direction D. However, in the power storage cell 2A, the welded areas 6, 7 do not reach the inner edge 17a, and the entirety of the welded areas 6, 7 is included in the welded area 8. A portion of the third resin layer 17 inward of the welded area 8 when viewed in the facing direction D is not welded (adhered) to the first resin layer 15 or the second resin layer 16.

In the power storage cell 2A, the first resin layer 15 is provided to extend beyond the outer edge 21d of the current collector 21 when viewed in the facing direction D. The second resin layer 16 is provided to extend beyond the outer edge 22d of the current collector 22 when viewed in the facing direction D. In the power storage device 1A, the first resin layer 15 and the second resin layer 16 respectively provided on the current collector 21 and the current collector 22 adjacent to each other in the facing direction D are welded to each other outside of the current collector 21 and the current collector 22 when viewed in the facing direction D.

In the power storage cell 2A, the separator 13 is not fixed to the exposed portion 16c. The separator 13 is fixed to the sealing portion 14 by the end portion 13a being inserted between the third resin layer 17 and the first resin layer 15 or the second resin layer 16. In the first variation, the end portion 13a is inserted between the third resin layer 17 and the second resin layer 16 at a position inward of the welded area 8. Furthermore, the end portion 13a is partially fixed to a surface of the third resin layer 17 on the second resin layer 16 side, for example, by spot welding. The end portion 13a may be welded and fixed to the first resin layer 15 or the second resin layer 16. The end portion 13a need not be welded and fixed to the first resin layer 15, the second resin layer 16, or the third resin layer 17, and the separator 13 may be fixed to the sealing portion 14 by the end portion 13a simply being inserted between the first resin layer 15 and the third resin layer 17 or between the second resin layer 16 and the third resin layer 17.

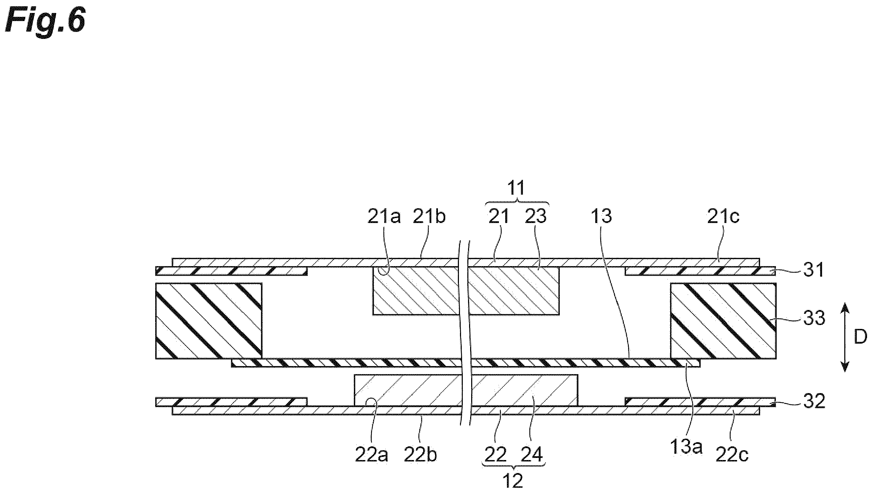

An example of a method for manufacturing the power storage device 1A will be described with reference to FIG. 6. FIG. 6 is a schematic cross-sectional view describing a method for manufacturing the power storage device illustrated in FIG. 4. Firstly, similarly to the method for manufacturing the power storage device 1, the cathode 11, the anode 12, the resin layer 31 to be the first resin layer 15, the resin layer 32 to be the second resin layer 16, and the resin layer 33 are prepared, the resin layer 31 is attached to the cathode 11, and the resin layer 32 is attached to the anode 12. In doing so, the resin layers 31, 32 are extended beyond the current collectors 21, 22. Secondly, the end portion 13a of the separator 13 is fixed to the resin layer 33 by spot welding. Subsequently, as illustrated in FIG, 6, the resin layer 33 to which the separator 13 is attached is inserted between the cathode 11 to which the resin layer 31 is attached and the anode 12 to which the resin layer 32 and the separator 13 are attached. The resin layers 31, 32, 33 are welded by pressing a heat plate against outer edges of the resin layers 31, 32, 33 or by heating the outer edges of the resin layers 31, 32, 33 with an infrared heating device with the resin layer 33 inserted between the cathode 11 and the anode 12 to form the welded area 8 that includes the welded areas 6, 7. In doing so, the resin layers 31, 32 adjacent to each other in the facing direction D are welded to each other outside of the current collectors 21, 22. As a result, the power storage device 1A that includes the tubular member 4 formed by the plurality of the sealing portions 14 being integrated is obtained.

In the power storage cell 2A, the third resin layer 17 is also welded to the first resin layer 15 at a position outward of the inner edge 15a of the first resin layer 15 when viewed in the facing direction D. An inner edge P5 of the welded area 6 is positioned outward of the inner edge P1 of the bonded area A1 when viewed in the facing direction D. Thus, the current collector 21 has an area in which only the first resin layer 15 is provided. Here, "provided" means being provided by being directly or indirectly fixed to the current collector 21 such as by adhesion to restrict the deformation of the current collector 21. That is, a case of simply being disposed on the current collector 21 without being fixed to the current collector 21, such as an inner edge portion of the third resin layer 17, is not included.

In the power storage cell 2A, the area of the current collector 21 in which only the first resin layer 15 is provided is the area from the inner edge 15a of the first resin layer 15 to the inner edge P5 of the welded area 6. In this area, the deformation of the current collector 21 is less restricted than in the area in which the first resin layer 15, the second resin layer 16, and the third resin layer 17 are all provided, such as the welded area 6. Thus, a portion of the stress generated by the deformation of the current collector 21 is transferred from the inner edge P1 of the bonded area A1 to the inner edge P5 of the welded area 6. It should be noted that the inner edge P5 of the welded area 6 may be provided outside of the outer edge 21d of the current collector 21 that does not overlap the bonded area A1 when viewed in the facing direction D.

Similarly, the third resin layer 17 is welded to the second resin layer 16 at a position outward of the inner edge 16a of the second resin layer 16 when viewed in the facing direction D. An inner edge P6 of the welded area 7 is positioned outward of the inner edge P3 of the bonded area A2 when viewed in the facing direction D. Thus, the current collector 22 has an area in which only the second resin layer 16 is provided. As described above, "provided" means being provided by being directly or indirectly fixed to the current collector 22 such as by adhesion to restrict the deformation of the current collector 22. That is, a case of simply being disposed on the current collector 22 without being fixed to the current collector 22, such as the inner edge portion of the third resin layer 17, is not included.

In the power storage cell 2A, the area of the current collector 22 in which only the second resin layer 16 is provided is the area from the inner edge 16a of the second resin layer 16 to the inner edge P6 of the welded area 7. In this area, the deformation of the current collector 22 is less restricted than in the area in which the first resin layer 15, the second resin layer 16, and the third resin layer 17 are all provided, such as the welded area 7. Thus, a portion of the stress generated by the deformation of the current collector 22 is transferred from the inner edge P3 of the bonded area A2 to the inner edge P6 of the welded area 7. It should be noted that the inner edge P6 of the welded area 7 may be provided outside of the outer edge 22d of the current collector 22 that does not overlap the bonded area A2 when viewed in the facing direction D.

In the power storage cell 2A, the stress generated by the deformation of the current collectors 21, 22 can also be distributed as described above, and thus peeling (cleaving) of the sealing portion 14 from the current collectors 21, 22 starting from the inner edges P1, P3 can be suppressed. In the power storage cell 2A, the first resin layer 15 and the second resin layer 16 are welded to each other outside of the current collector 21 and the current collector 22 when viewed in the facing direction D. Thus, the entirety of the edge portion 21c of the current collector 21 and the edge portion 22c of the current collector 22 can be covered by the first resin layer 15 and the second resin layer 16. Consequently, the third resin layer 17 does not come into contact with the current collector 21 or the current collector 22. Accordingly, a material that has a low adhesive strength to the current collector 21 and the current collector 22 can be selected as the material for forming the third resin layer 17.

### (Second Variation)

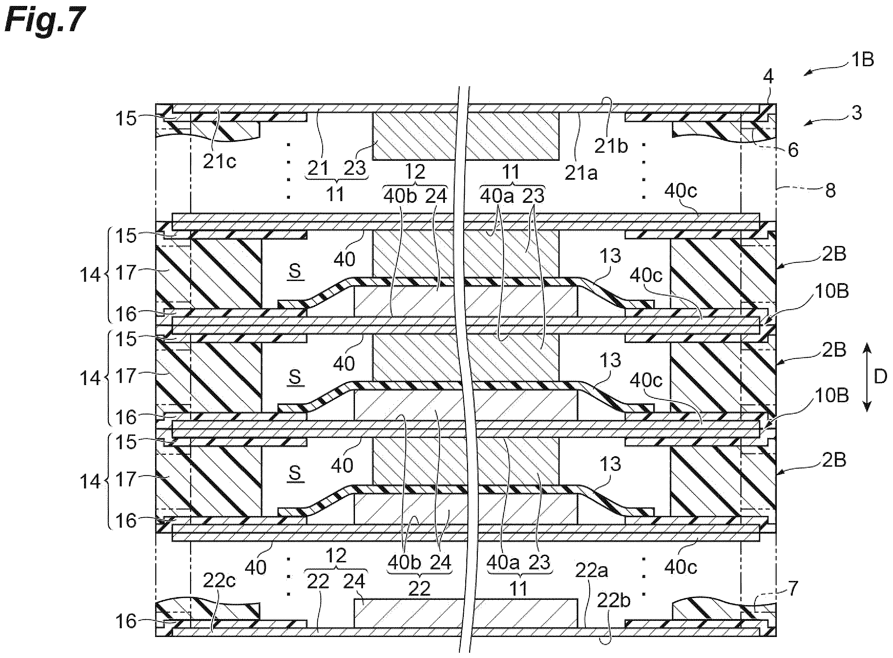

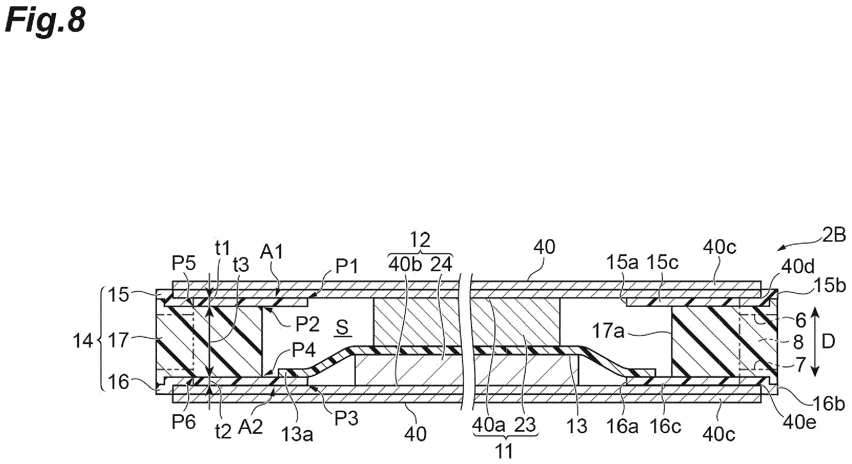

FIG. 7 is a schematic cross-sectional view illustrating a power storage device according to a second variation. FIG. 8 is a schematic cross-sectional view of a power storage cell illustrated in FIG. 7. FIG. 8 is a partly enlarged view of FIG. 7. In the power storage device 1 illustrated in FIG. 1, the pseudo bipolar electrode 10 is formed by the current collector 21 and the current collector 22, which are different members, serving as one current collector as described above. However, a power storage device 1B according to the second variation illustrated in FIG. 7 includes a bipolar electrode 10B having a current collector 40 that is formed as a single member. As illustrated in FIGS. 7 and 8, the current collector 40 has a first face 40a and a second face 40b that face away from each other, and an edge portion 40c. The bipolar electrode 10B further has the cathode active material layer 23 provided on the first face 40a and the anode active material layer 24 provided on the second face 40b. In the bipolar electrode 10B, one current collector 40 forms the cathode 11 together with the cathode active material layer 23 provided on the first face 40a, and forms the anode 12 together with the anode active material layer 24 provided on the second face 40b. More specifically, the first face 40a of one current collector 40 forms the cathode 11 together with the cathode active material layer 23, and the second face 40b forms the anode 12 together with the anode active material layer 24. That is, in each bipolar electrode 10B, one current collector 40 is shared by the cathode 11 and the anode 12, functions as the first current collector that forms the cathode 11, and functions as the second current collector that forms the anode 12. A power storage cell 2B is different from the power storage cell 2 (see FIG. 1) in that the power storage cells 2B adjacent in the facing direction D share one current collector 40.

Similarly to the current collectors 21, 22, the current collector 40 is a chemically inactive electrical conductor to keep current flowing to the cathode active material layer 23 and the anode active material layer 24 during discharging or charging of the lithium-ion secondary battery. The configuration of the current collector 40 is, for example, the same as the configurations of the current collectors 21, 22. Here, a current collector integrated by pasting together an aluminum foil and a copper foil, which are two different metal foils, is used as the current collector 40. The first face 40a is formed by a surface of the aluminum foil, and the second face 40b is formed by a surface of the copper foil.

No active material layer is provided on the first face 40a side or the second face 40b side of the edge portion 40c of the current collector 40. In other words, the first face 40a and the second face 40b have an area in the edge portion 40c in which no active material layer is provided. The edge portion 40c is positioned outside of the area in which the cathode active material layer 23 or the anode active material layer 24 is provided in the current collector 40 when viewed in the facing direction D.

In the bipolar electrode 10B, the bonded area A1 is an area in which the first resin layer 15 and the first face 40a are bonded, and is formed by an interface between the first resin layer 15 and the first face 40a. In the bipolar electrode 10B, the bonded area A2 is an area in which the second resin layer 16 and the second face 40b are bonded, and is formed by an interface between the second resin layer 16 and the second face 40b.

The power storage device 1B is formed by stacking a plurality of the bipolar electrodes 10B, one cathode 11 that functions as a cathode terminal electrode, and one anode 12 that functions as an anode terminal electrode. By stacking such electrodes, a state in which a plurality of the power storage cells 2B are stacked is achieved in the power storage device 1B.

Similarly to the power storage cell 2A, the power storage cell 2B is also different from the power storage cell 2 in the following point. That is, the welded areas 6, 7 do not reach the inner edge 17a, and the entirety of the welded areas 6, 7 is included in the welded area 8. In the cathode 11, the first resin layer 15 is provided to extend beyond the outer edge 21d of the first face 21a of the current collector 21 when viewed in the facing direction D (see FIG. 5). In the bipolar electrode 10B, the first resin layer 15 is provided to extend beyond an outer edge 40d of the first face 40a of the current collector 40, and the second resin layer 16 is provided to extend beyond an outer edge 40e of the second face 40b of the current collector 40, when viewed in the facing direction D. In the anode 12, the second resin layer 16 is provided to extend beyond the outer edge 22d of the first face 22a of the current collector 22 when viewed in the facing direction D (see FIG. 5). In the bipolar electrode 10B, a portion of the first resin layer 15 provided on the first face 40a of the current collector 40 and extending beyond the outer edge 40d of the first face 40a when viewed in the facing direction D and a portion of the second resin layer 16 provided on the second face 40b and extending beyond the outer edge 40e of the second face 40b when viewed in the facing direction D are welded to each other.

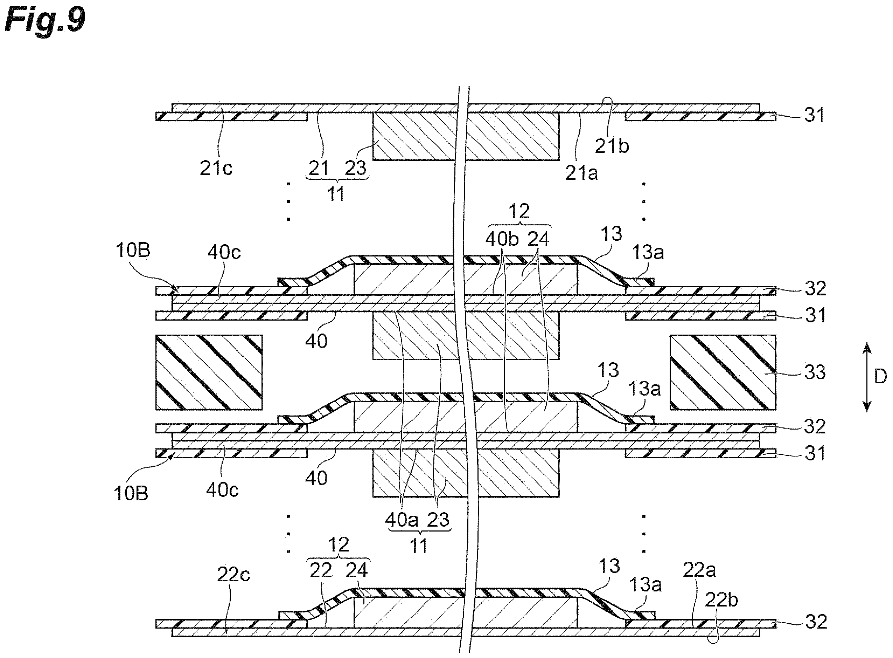

An example of a method for manufacturing the power storage device 1B will be described with reference to FIGS. 7 to 9. FIG. 9 is a schematic cross-sectional view describing a method for manufacturing the power storage device illustrated in FIG. 7. Firstly, similarly to the method for manufacturing the power storage device 1A, the cathode 11 to be the cathode terminal electrode, the anode 12 to be the anode terminal electrode, the resin layer 31 to be the first resin layer 15, the resin layer 32 to be the second resin layer 16, and the resin layer 33 are prepared, the resin layer 31 is attached to the cathode 11, and the resin layer 32 is attached to the anode 12. In doing so, an outer edge of the resin layer 31 is extended beyond the outer edge 21d of the current collector 21 when viewed in the facing direction D, and an outer edge of the resin layer 32 is extended beyond the outer edge 22d of the current collector 22 when viewed in the facing direction D. In the method for manufacturing the power storage device 1B, a plurality of the bipolar electrodes 10B are also prepared, the resin layer 31 is attached to the edge portion 40c of the first face 40a of the current collector 40, and the resin layer 32 is attached to the edge portion 40c of the second face 40b of the current collector 40. In doing so, the outer edge of the resin layer 31 is extended beyond the outer edge 40d of the current collector 40 when viewed in the facing direction D, and the outer edge of the resin layer 32 is extended beyond the outer edge 40e of the current collector 40 when viewed in the facing direction D. Then, the separator 13 is disposed on the first face 22a of the anode 12, the bipolar electrode 10B is disposed on the second face 40b, and the end portion 13a of the separator 13 is adhered and fixed to the resin layer 32 by spot welding.

Subsequently, the anode 12 to which the resin layer 32 and the separator 13 are attached, the plurality of bipolar electrodes 10B to which the resin layers 31, 32 and the separator 13 are attached, and the cathode 11 to which the resin layer 31 is attached are stacked in the facing direction D. In doing so, the resin layer 33 is inserted between adjacent electrodes (that is, between the anode 12 and the bipolar electrode 10B adjacent to each other, between the adjacent pair of bipolar electrodes 10B, and between the bipolar electrode 10B and the cathode 11 adjacent to each other), and the outer edges of the resin layers 31, 32, 33 are welded by pressing a heat plate against the outer edges of the resin layers 31, 32, 33 or by heating the outer edges of the resin layers 31, 32, 33 with an infrared heating device to form the welded area 8 that includes the welded areas 6, 7. The space S is thus formed. The resin layers 31, 32 adjacent to each other in the facing direction D are welded to each other outside of the outer edges 40d, 40e of the current collector 40 when viewed in the facing direction D. As a result, the power storage device 1B that includes the tubular member 4 formed by the plurality of sealing portions 14 being integrated is obtained.

In the power storage cell 2B, the third resin layer 17 is also welded to the first resin layer 15 at a position outward of the inner edge 15a of the first resin layer 15 when viewed in the facing direction D. The inner edge P5 of the welded area 6 is positioned outward of the inner edge P1 of the bonded area A1 when viewed in the facing direction D. Thus, the first face 21a of the current collector 21 and the first face 40a of the current collector 40 each has an area in which only the first resin layer 15 is formed. In this area, the deformation of the current collectors 21, 40 is less restricted than in the area in which the first resin layer 15, the second resin layer 16, and the third resin layer 17 are all provided. Consequently, a portion of the stress generated by the deformation of the current collectors 21, 40 is transferred from the inner edge P1 of the bonded area A1 to the inner edge P5 of the welded area 6. It should be noted that the inner edge P5 of the welded area 6 may be provided outside of the outer edge 40d of the current collector 40 that does not overlap the bonded area A1 when viewed in the facing direction D.

Similarly, the third resin layer 17 is welded to the second resin layer 16 at a position outward of the inner edge 16a of the second resin layer 16 when viewed in the facing direction D. The inner edge P6 of the welded area 7 is positioned outward of the inner edge P3 of the bonded area A2 when viewed in the facing direction D. Thus, the first face 22a of the current collector 22 and the second face 40b of the current collector 40 each has an area in which only the second resin layer 16 is formed. In this area, the deformation of the current collectors 22, 40 is less restricted than in the area in which the first resin layer 15, the second resin layer 16, and the third resin layer 17 are all provided. Consequently, a portion of the stress generated by the deformation of the current collectors 22, 40 is transferred from the inner edge P3 of the bonded area A2 to the inner edge P6 of the welded area 7. It should be noted that the inner edge P6 of the welded area 7 may be provided outside of the outer edge 40e of the current collector 40 that does not overlap the bonded area A2 when viewed in the facing direction D.

In the power storage cell 2B, the stress generated by the deformation of the current collectors 21, 22, 40 can also be distributed as described above, and thus peeling (cleaving) of the sealing portion 14 from the current collectors 21, 22 starting from the inner edges P1, P3 can be suppressed.

The embodiments and variations above may be combined as appropriate. Although the widths of the exposed portion 15c and the exposed portion 16c are the same in the power storage cells 2, 2A, 2B, the width of the exposed portion 16c to which the end portion 13a is fixed may be greater than the width of the exposed portion 15c. That is, the inner edge 16a of the second resin layer 16 may be positioned inward of the inner edge 15a of the first resin layer 15 when viewed in the facing direction D. In this case, the separator 13 can be stably fixed to the exposed portion 16c since the width of the exposed portion 16c is large. Additionally, the space S can further be kept large since the width of the exposed portion 15c is small.

Although the end portion 13a of the separator 13 is fixed to the second resin layer 16 at a position inward of the inner edge 17a of the third resin layer 17 in the power storage cells 2, 2B, it may be fixed to the first resin layer 15. That is, the end portion 13a may be welded to the exposed portion 15c, not the exposed portion 16c. In this case, the inner edge 15a may be positioned inward of the inner edge 16a when viewed in the facing direction D. The separator 13 can be stably fixed to the exposed portion 15c since the width of the exposed portion 15c is large. Additionally, the space S can further be kept large since the width of the exposed portion 16c is small.

In the power storage cell 2, the first resin layer 15 need not be provided to extend to the outer edge 21d of the first face 21a, and the second resin layer 16 need not be provided to extend to the outer edge 22d of the first face 22a. Even in this case, the reduction in the adhesive strength between the sealing portion 14 and the current collectors 21, 22 can be suppressed, for example, by forming the third resin layer 17 of acid-modified polyethylene or acid-modified polypropylene. In the power storage cell 2A, the first resin layer 15 need not be provided to extend beyond the first face 21a, and the second resin layer 16 need not be provided to extend beyond the first face 22a.

In the power storage cell 2, the welded area 8 may be spaced from the welded areas 6, 7 without having a portion that overlaps the current collectors 21, 22 when viewed in the facing direction D. In the power storage cell 2, the welded area 8 need not be provided. That is, in the tubular member 4, the plurality of sealing portions 14 need not be integrated by welding. In this case, the power storage device 1 may, for example, further include a restricting member that applies a restricting load to the tubular member 4 in the stacking direction, to thereby stably maintain a state in which the plurality of power storage cells 2 are stacked.

In the power storage cell 2A, the inner edge 17a of the third resin layer 17 may coincide with the inner edge 15a of the first resin layer 15 and the inner edge 16a of the second resin layer 16 when viewed in the facing direction D, or may be positioned inward of the inner edge 15a of the first resin layer 15 and the inner edge 16a of the second resin layer 16.

In the power storage cell 2B, the separator 13 may be fixed to the sealing portion 14 by the end portion 13a being inserted between the third resin layer 17 and the first resin layer 15 or the second resin layer 16.

### Reference Signs List

1, 1A, 1B...Power storage device, 2, 2A, 2B...Power storage cell, 3...Cell stack, 6, 7, 8...Welded area, 11...Cathode, 12...Anode, 13...Separator, 13a...End portion, 14...Sealing portion, 15...First resin layer, 15a... Inner edge, 15b... Outer edge, 15c...Exposed portion, 16... Second resin layer, 16a... Inner edge, 16b... Outer edge, 16c...Exposed portion, 17... Third resin layer, 17a...Inner edge, 21...Current collector, 21a...First face, 21d... Outer edge, 22...Current collector, 22a... First face, 22d...Outer edge, 23 ...Cathode active material layer, 24... Anode active material layer, 40... Current collector, 40a...First face, 40b...Second face, 40d, 40e...Outer edge, A1, A2...Bonded area, S...Space, P1, P2, P3, P4, P5, P6... Inner edge 16c... Exposed portion, 17... Third resin layer, 17a...Inner edge, 21...Current collector, 21a...First face, 21d... Outer edge, 22...Current collector, 22a... First face, 22d...Outer edge, 23...Cathode active material layer, 24...Anode active material layer, 40...Current collector, 40a...First face, 40b...Second face, 40d, 40e...Outer edge, A1, A2...Bonded area, S...Space, P1, P2, P3, P4, P5, P6... Inner edge

## Claims

1. A power storage cell (2, 2A, 2B) comprising:
a cathode (11) having a first current collector (21), and a cathode active material layer (23) provided on one surface of the first current collector (21);
an anode (12) having a second current collector (22), and an anode active material layer (24) provided on one surface of the second current collector (22) and facing the cathode active material layer (23);
a separator (13) disposed between the cathode active material layer (23) and the anode active material layer (24) in a facing direction in which the cathode active material layer (23) and the anode active material layer (24) face each other; and
a frame-like sealing portion (14) disposed between the first current collector (21) and the second current collector (22) to surround a periphery of the cathode active material layer (23) and the anode active material layer (24) when viewed in the facing direction, the sealing portion (14) sealing an electrolyte in a space (S) between the first current collector (21) and the second current collector (22),
wherein the sealing portion (14) includes:
a first resin layer (15) spaced from the cathode active material layer (23) and bonded to the one surface of the first current collector (21);
a second resin layer (16) spaced from the anode active material layer (24) and bonded to the one surface of the second current collector (22); and
a third resin layer (17) provided between the first resin layer (15) and the second resin layer (16) in the facing direction, and welded to the first resin layer (15) and the second resin layer (16), **characterized in that**
the sealing portion (14) further includes
a welded area (6, 7, 8) formed by an outer edge portion (15b) of the first resin layer (15), an outer edge portion (16b) of the second resin layer (16), and an outer edge portion of the third resin layer (17) being integrated with each other by welding,
wherein an inner edge of the welded area (6, 7, 8) is positioned outward of an inner edge of a bonded area (A1) between the first resin layer (15) and the first current collector (21), and an inner edge of a bonded area (A2) between the second resin layer (16) and the second current collector (22) when viewed in the facing direction, and
wherein the third resin layer (17) has a portion not welded to the first resin layer (15) or the second resin layer (16) inward of the welded area (6, 7, 8) when viewed in the facing direction.

2. The power storage cell (2, 2A, 2B) according to claim 1, wherein an inner edge (15a) of the first resin layer (15) and an inner edge (16a) of the second resin layer (16) are positioned inward of an inner edge (17a) of the third resin layer (17) when viewed in the facing direction.

3. The power storage cell (2, 2A, 2B) according to claim 1 or 2, wherein the inner edge of the bonded area (A1) between the first resin layer (15) and the first current collector (21) and the inner edge of the bonded area (A2) between the second resin layer (16) and the second current collector (22) are positioned inward of the inner edge (17a) of the third resin layer (17) when viewed in the facing direction.

4. The power storage cell (2, 2A, 2B) according to any one of claims 1 to 3,
wherein the welded area (6, 7, 8) overlaps the bonded area (A1) between the first resin layer (15) and the first current collector (21), and the bonded area (A2) between the second resin layer (16) and the second current collector (22) when viewed in the facing direction.

5. The power storage cell (2, 2A, 2B) according to any one of claims 1 to 3,
wherein the inner edge of the welded area (6, 7, 8) is positioned outward of an outer edge (21d) of the first current collector (21) and an outer edge (22d) of the second current collector (22) when viewed in the facing direction.

6. The power storage cell (2, 2A, 2B) according to any one of claims 1 to 5,
wherein the bonded area (A1) between the first resin layer (15) and the first current collector (21) is formed by an entire interface between the first resin layer (15) and the one surface of the first current collector (21), and
wherein the bonded area (A2) between the second resin layer (16) and the second current collector (22) is formed by an entire interface between the second resin layer (16) and the one surface of the second current collector (22).

7. The power storage cell (2, 2A, 2B) according to any one of claims 1 to 6, wherein thicknesses of the first resin layer (15) and the second resin layer (16) are less than or equal to a thickness of the third resin layer (17) in the facing direction.

8. The power storage cell (2, 2A, 2B) according to any one of claims 1 to 7,
wherein the first resin layer (15) or the second resin layer (16) includes an exposed portion (15c, 16c) exposed from the third resin layer (17) to face the space (S), and
wherein an end portion (13a) of the separator (13) is fixed to the exposed portion (15c, 16c).

9. A power storage device (1, 1A, 1B) comprising a stack (3) in which a plurality of the power storage cells (2, 2A, 2B) according to any one of claims 1 to 8 are stacked in the facing direction,
wherein the first current collector (21) of one of the power storage cells (2, 2A, 2B) adjacent to each other in the facing direction is electrically connected to the second current collector (22) of another of the power storage cells (2, 2A, 2B).

10. The power storage device (1, 1A, 1B) according to claim 9,
wherein the first resin layer (15) is provided to extend beyond the first current collector (21) when viewed in the facing direction,
wherein the second resin layer (16) is provided to extend beyond the second current collector (22) when viewed in the facing direction, and
wherein the first resin layer (15) and the second resin layer (16) respectively provided on the first current collector (21) and the second current collector (22) adjacent to each other in the facing direction are welded to each other outside of the first current collector (21) and the second current collector (22) when viewed in the facing direction.

## Patentansprüche

1. Energiespeicherzelle (2, 2A, 2B), mit Folgendem:
einer Kathode (11) mit einem ersten Stromkollektor (21) und einer Kathoden-Aktivmaterialschicht (23), die auf einer Oberfläche des ersten Stromkollektors (21) vorgesehen ist;
einer Anode (12) mit einem zweiten Stromkollektor (22) und einer Anoden-Aktivmaterialschicht (24), die auf einer Oberfläche des zweiten Stromkollektors (22) vorgesehen und der Kathoden-Aktivmaterialschicht (23) zugewandt ist;
einem Separator (13), der zwischen der Kathoden-Aktivmaterialschicht (23) und der Anoden-Aktivmaterialschicht (24) in einer Blickrichtung angeordnet ist, in der die Kathoden-Aktivmaterialschicht (23) und die Anoden-Aktivmaterialschicht (24) einander zugewandt sind; und
einem rahmenartigen Dichtungsabschnitt (14), der zwischen dem ersten Stromkollektor (21) und dem zweiten Stromkollektor (22) angeordnet ist, um einen Umfang der Kathoden-Aktivmaterialschicht (23) und der Anoden-Aktivmaterialschicht (24) zu umschließen, wenn in Blickrichtung betrachtet, wobei der Dichtungsabschnitt (14) einen Elektrolyten in einem Raum (S) zwischen dem ersten Stromkollektor (21) und dem zweiten Stromkollektor (22) abdichtet,
wobei der Dichtungsabschnitt (14) Folgendes aufweist:
eine erste Harzschicht (15), die von der Kathoden-Aktivmaterialschicht (23) beabstandet ist und mit der einen Oberfläche des ersten Stromkollektors (21) verbunden ist;
eine zweite Harzschicht (16), die von der Anoden-Aktivmaterialschicht (24) beabstandet ist und mit der einen Oberfläche des zweiten Stromkollektors (22) verbunden ist; und
eine dritte Harzschicht (17), die in Blickrichtung zwischen der ersten Harzschicht (15) und der zweiten Harzschicht (16) vorgesehen ist und mit der ersten Harzschicht (15) und der zweiten Harzschicht (16) verschweißt ist, **dadurch gekennzeichnet, dass**
der Dichtungsabschnitt (14) ferner Folgendes aufweist:
einen Schweißbereich (6, 7, 8), der durch einen Außenrandabschnitt (15b) der ersten Harzschicht (15), einen Außenrandabschnitt (16b) der zweiten Harzschicht (16) und einen Außenrandabschnitt der dritten Harzschicht (17) gebildet wird, die durch Schweißen miteinander verbunden sind,
wobei eine Innenkante des Schweißbereichs (6, 7, 8) in Blickrichtung gesehen außerhalb einer Innenkante eines Verbindungsbereichs (A1) zwischen der ersten Harzschicht (15) und dem ersten Stromkollektor (21) sowie einer Innenkante eines Verbindungsbereichs (A2) zwischen der zweiten Harzschicht (16) und dem zweiten Stromkollektor (22) positioniert ist, und
wobei die dritte Harzschicht (17) in Blickrichtung gesehen einen Abschnitt aufweist, der nicht mit der ersten Harzschicht (15) oder der zweiten Harzschicht (16) innerhalb des Schweißbereichs (6, 7, 8) verschweißt ist.

2. Energiespeicherzelle (2, 2A, 2B) nach Anspruch 1, wobei eine Innenkante (15a) der ersten Harzschicht (15) und eine Innenkante (16a) der zweiten Harzschicht (16) in Blickrichtung gesehen in der Innenseite einer Innenkante (17a) der dritten Harzschicht (17) angeordnet sind.

3. Energiespeicherzelle (2, 2A, 2B) nach Anspruch 1 oder 2, wobei die Innenkante des Verbindungsbereichs (A1) zwischen der ersten Harzschicht (15) und dem ersten Stromkollektor (21) sowie die Innenkante des Verbindungsbereichs (A2) zwischen der zweiten Harzschicht (16) und dem zweiten Stromkollektor (22) in Blickrichtung gesehen innerhalb der Innenkante (17a) der dritten Harzschicht (17) liegen.

4. Energiespeicherzelle (2, 2A, 2B) nach einem der Ansprüche 1 bis 3,
wobei der Schweißbereich (6, 7, 8) den Verbindungsbereich (A1) zwischen der ersten Harzschicht (15) und dem ersten Stromkollektor (21) sowie den Verbindungsbereich (A2) zwischen der zweiten Harzschicht (16) und dem zweiten Stromkollektor (22) überlappt, in Blickrichtung gesehen.

5. Energiespeicherzelle (2, 2A, 2B) gemäß einem der Ansprüche 1 bis 3,
wobei die Innenkante des Schweißbereichs (6, 7, 8) in Blickrichtung gesehen außerhalb einer Außenkante (21d) des ersten Stromkollektors (21) und einer Außenkante (22d) des zweiten Stromkollektors (22) positioniert ist.

6. Energiespeicherzelle (2, 2A, 2B) nach einem der Ansprüche 1 bis 5,
wobei der Verbindungsbereich (A1) zwischen der ersten Harzschicht (15) und dem ersten Stromkollektor (21) durch die gesamte Grenzfläche zwischen der ersten Harzschicht (15) und der einen Oberfläche des ersten Stromkollektors (21) gebildet wird, und
wobei der Verbindungsbereich (A2) zwischen der zweiten Harzschicht (16) und dem zweiten Stromkollektor (22) durch eine gesamte Grenzfläche zwischen der zweiten Harzschicht (16) und der einen Oberfläche des zweiten Stromkollektors (22) gebildet wird.

7. Energiespeicherzelle (2, 2A, 2B) nach einem der Ansprüche 1 bis 6, wobei die Dicken der ersten Harzschicht (15) und der zweiten Harzschicht (16) in Blickrichtung kleiner oder gleich der Dicke der dritten Harzschicht (17) sind.

8. Energiespeicherzelle (2, 2A, 2B) nach einem der Ansprüche 1 bis 7,
wobei die erste Harzschicht (15) oder die zweite Harzschicht (16) einen freiliegenden Abschnitt (15c, 16c) aufweist, der gegenüber der dritten Harzschicht (17) freiliegt, um dem Raum (S) zugewandt zu sein, und
wobei ein Endabschnitt (13a) des Separators (13) an dem freiliegenden Abschnitt (15c, 16c) befestigt ist.

9. Energiespeichervorrichtung (1, 1A, 1B), mit einem Stapel (3), in dem eine Vielzahl der Energiespeicherzellen (2, 2A, 2B) gemäß einem der Ansprüche 1 bis 8 in Blickrichtung gestapelt sind,
wobei der erste Stromkollektor (21) einer der Energiespeicherzellen (2, 2A, 2B), die in der Blickrichtung nebeneinander liegen, elektrisch mit dem zweiten Stromkollektor (22) einer anderen der Energiespeicherzellen (2, 2A, 2B) verbunden ist.

10. Energiespeichervorrichtung (1, 1A, 1B) nach Anspruch 9,
wobei die erste Harzschicht (15) ausgebildet ist, um sich in Blickrichtung gesehen über den ersten Stromkollektor (21) hinaus zu erstrecken,
wobei die zweite Harzschicht (16) ausgebildet ist, um sich in Blickrichtung gesehen über den zweiten Stromkollektor (22) hinaus zu erstrecken, und
wobei die erste Harzschicht (15) und die zweite Harzschicht (16), die jeweils auf dem ersten Stromkollektor (21) und dem zweiten Stromkollektor (22) in Blickrichtung nebeneinander angeordnet sind, außerhalb des ersten Stromkollektors (21) und des zweiten Stromkollektors (22) in Blickrichtung gesehen miteinander verschweißt sind.

## Revendications

1. Cellule de stockage d'énergie (2, 2A, 2B) comprenant :
une cathode (11) comportant un premier collecteur de courant (21) et une couche de matériau actif cathodique (23) agencée sur une surface du premier collecteur de courant (21) ;
une anode (12) comportant un deuxième collecteur de courant (22), et une couche de matériau actif d'anode (24) agencée sur une surface du deuxième collecteur de courant (22) et faisant face à la couche de matériau actif de cathode (23) ;
un séparateur (13) disposé entre la couche de matériau actif cathodique (23) et la couche de matériau actif anodique (24) dans une direction de face dans laquelle la couche de matériau actif cathodique (23) et la couche de matériau actif anodique (24) se font face ; et
une partie d'étanchéité en forme de cadre (14) disposée entre le premier collecteur de courant (21) et le deuxième collecteur de courant (22) de manière à entourer une périphérie de la couche de matériau actif cathodique (23) et de la couche de matériau actif anodique (24) lorsqu'on regarde dans la direction de face, la partie d'étanchéité (14) scellant un électrolyte dans un espace (S) entre le premier collecteur de courant (21) et le deuxième collecteur de courant (22),
la partie d'étanchéité (14) comportant :
une première couche de résine (15) espacée de la couche de matériau actif cathodique (23) et liée à l'une surface du premier collecteur de courant (21) ;
une deuxième couche de résine (16) espacée de la couche de matériau actif d'anode (24) et liée à l'une surface du deuxième collecteur de courant (22) ; et
une troisième couche de résine (17) disposée entre la première couche de résine (15) et la deuxième couche de résine (16) dans la direction de face, et soudée à la première couche de résine (15) et à la deuxième couche de résine (16), **caractérisée en ce que**
la partie d'étanchéité (14) comporte en outre
une zone soudée (6, 7, 8) formée par une partie de bord extérieur (15b) de la première couche de résine (15), une partie de bord extérieur (16b) de la deuxième couche de résine (16) et une partie de bord extérieur de la troisième couche de résine (17) qui sont intégrées les unes aux autres par soudage,
un bord intérieur de la zone soudée (6, 7, 8) étant positionné à l'extérieur d'un bord intérieur d'une zone de liaison (A1) entre la première couche de résine (15) et le premier collecteur de courant (21), et d'un bord intérieur d'une zone de liaison (A2) entre la deuxième couche de résine (16) et le deuxième collecteur de courant (22) lorsqu'on regarde dans la direction de face, et
la troisième couche de résine (17) comportant une partie non soudée à la première couche de résine (15) ou à la deuxième couche de résine (16) vers l'intérieur de la zone soudée (6, 7, 8) lorsqu'on regarde dans la direction de face.

2. Cellule de stockage d'énergie (2, 2A, 2B) selon la revendication 1, dans laquelle un bord intérieur (15a) de la première couche de résine (15) et un bord intérieur (16a) de la deuxième couche de résine (16) sont positionnés vers l'intérieur d'un bord intérieur (17a) de la troisième couche de résine (17) lorsqu'on regarde dans la direction de face.

3. Cellule de stockage d'énergie (2, 2A, 2B) selon la revendication 1 ou 2, dans laquelle le bord intérieur de la zone de liaison (A1) entre la première couche de résine (15) et le premier collecteur de courant (21) et le bord intérieur de la zone de liaison (A2) entre la deuxième couche de résine (16) et le deuxième collecteur de courant (22) sont positionnés à l'intérieur du bord intérieur (17a) de la troisième couche de résine (17) lorsqu'on regarde dans la direction de face.

4. Cellule de stockage d'énergie (2, 2A, 2B) selon l'une quelconque des revendications 1 à 3,
dans laquelle la zone soudée (6, 7, 8) recouvre la zone de liaison (A1) entre la première couche de résine (15) et le premier collecteur de courant (21), et la zone de liaison (A2) entre la deuxième couche de résine (16) et le deuxième collecteur de courant (22) lorsqu'on regarde dans la direction de face.

5. Cellule de stockage d'énergie (2, 2A, 2B) selon l'une quelconque des revendications 1 à 3,
dans laquelle le bord intérieur de la zone soudée (6, 7, 8) est positionné à l'extérieur d'un bord extérieur (21d) du premier collecteur de courant (21) et d'un bord extérieur (22d) du deuxième collecteur de courant (22) lorsqu'on regarde dans la direction de face.

6. Cellule de stockage d'énergie (2, 2A, 2B) selon l'une quelconque des revendications 1 à 5,
dans laquelle la zone de liaison (A1) entre la première couche de résine (15) et le premier collecteur de courant (21) est formée par une interface entière entre la première couche de résine (15) et l'une surface du premier collecteur de courant (21), et
dans laquelle la zone de liaison (A2) entre la deuxième couche de résine (16) et le deuxième collecteur de courant (22) est formée par une interface entière entre la deuxième couche de résine (16) et l'une surface du deuxième collecteur de courant (22).

7. Cellule de stockage d'énergie (2, 2A, 2B) selon l'une quelconque des revendications 1 à 6, dans laquelle des épaisseurs de la première couche de résine (15) et de la deuxième couche de résine (16) sont inférieures ou égales à une épaisseur de la troisième couche de résine (17) dans la direction de face.

8. Cellule de stockage d'énergie (2, 2A, 2B) selon l'une quelconque des revendications 1 à 7,
dans laquelle la première couche de résine (15) ou la deuxième couche de résine (16) comporte une partie exposée (15c, 16c) exposée à partir de la troisième couche de résine (17) pour faire face à l'espace (S), et
dans laquelle une partie d'extrémité (13a) du séparateur (13) est fixée à la partie exposée (15c, 16c).

9. Dispositif de stockage d'énergie (1, 1A, 1B) comprenant un empilement (3) dans lequel une pluralité de cellules de stockage d'énergie (2, 2A, 2B) selon l'une quelconque des revendications 1 à 8 sont empilées dans la direction de face,
dans lequel le premier collecteur de courant (21) de l'une des cellules de stockage d'énergie (2, 2A, 2B) adjacentes les unes aux autres dans la direction de face est connecté électriquement au deuxième collecteur de courant (22) d'une autre des cellules de stockage d'énergie (2, 2A, 2B).

10. Dispositif de stockage d'énergie (1, 1A, 1B) selon la revendication 9,
dans lequel la première couche de résine (15) est agencée pour s'étendre au-delà du premier collecteur de courant (21) lorsqu'on regarde dans la direction de face,
dans lequel la deuxième couche de résine (16) est agencée pour s'étendre au-delà du deuxième collecteur de courant (22) lorsqu'on regarde dans la direction de face, et
dans lequel la première couche de résine (15) et la deuxième couche de résine (16), respectivement agencées sur le premier collecteur de courant (21) et le deuxième collecteur de courant (22) adjacents l'un à l'autre dans la direction de face, sont soudées l'une à l'autre à l'extérieur du premier collecteur de courant (21) et du deuxième collecteur de courant (22) lorsqu'on regarde dans la direction de face.
